# EUROPEAN PATENT APPLICATION

(11) **EP 3 595 165 A1**
(43) Date of publication of application: **15.01.2020**
(21) Application number: 18182453.3
(22) Date of filing: 09.07.2018
(51) Int. Cl.: H02P 9/00

(54) **ELECTRIC CIRCUIT FOR A POWER PLANT, WIND TURBINE INSTALLATION WITH ELECTRIC CIRCUIT AND METHOD TO OPERATE THE ELECTRIC CIRCUIT**

(71) Applicant: youWINenergy GmbH, 27568 Bremerhaven (DE)
(72) Inventor: ROHDEN, Rolf, 26607 Aurich (DE)
(74) Representative: Bird & Bird LLP

(57) **Abstract**

Electric circuit (1) arranged for a power plant, preferably for a wind turbine installation, the electric circuit comprising a driven generator (6) having a stator (100),
the stator having at least six sectors (101, 102, 103, 104, 105, 106) arranged along a circumference of the stator, each sector having three star circuits connected in parallel, each star circuit having three stator windings supported by the stator,
wherein a first sector (101) is arranged opposite of a fourth sector (104), a second sector (102) adjacent to the first sector and opposite of a fifth sector (105), a third sector (103) adjacent to the second sector and opposite of a sixth sector (106),
the electric circuit further comprising
a first rectifier (3a) connectable with the stator windings of the first and fourth sector, a second rectifier (3b) connectable with the stator windings of the second and fifth sector, a third rectifier (3c) connectable with the stator windings of the third and sixth sector,
a first switch (2a) operable to connect the stator windings of the first (101) and fourth sector (104) with the second (3b) or third rectifier (3c).

## Description

The present invention relates to an electric circuit for a power plant, a wind turbine installation comprising the electric circuit and a method to operate the electric circuit. The electric circuit is explained with respect to a wind turbine installation and may be uses for other power plants advantageously.

An electric circuit known to the applicant comprises a three phase generator and several rectifiers.

### Problem and solution

The performance of some of such electric circuits has been considered insufficient.

It is an object of the present invention to provide an improved electric circuit.

The above object is solved by the electric circuit of claim 1 (first aspect), the wind turbine installation including the electric circuit (claim 6) (second aspect) and by the method given by claim 7 (third aspect). Preferred embodiments of the invention form the respective subject matter of the depending claims.

The electric circuit according to the first aspect is arranged for a power plant, preferably for a wind turbine installation. The electric circuit comprises a driven generator having a stator. The stator comprises at least six sectors arranged along a circumference of the stator, each sector having three star circuits connected in parallel and each star circuit having three stator windings supported by the stator. A first sector is arranged opposite of a fourth sector, a second sector adjacent to the first sector and opposite of a fifth sector, a third sector adjacent to the second sector and opposite of a sixth sector. The electric circuit further comprises a first rectifier which is connectable with the stator windings of the first and fourth sector, a second rectifier connectable with the stator windings of the second and fifth sector and a third rectifier connectable with the stator windings of the third and sixth sector. A first switch of the electric circuit is operable to connect the stator windings of the first and fourth sector with one of the first, second and third rectifiers.

Even when the first rectifier fails, energy will be provided from the stator windings of the first and fourth sector through the second or third rectifier to the grid. Further, the first rectifier can be preserved or subjected to maintenance when the generator operates at partial load. Thereby, the underlying object is solved.

### Preferred embodiments

Preferred embodiments explained in the following can be combined with each other, advantageously, unless stated otherwise.

According to a preferred embodiment, the first switch is operable to isolate the stator windings of the first and the fourth sector. The first switch can be operable to reversibly connect the stator windings of the first and the fourth sector with the first, second or third rectifiers. This may help to preserve the stator windings of first and fourth sector, particularly when the generator operates at partial load.

Preferably, the electric circuit has a second switch which is operable to reversibly connect the stator windings of the second and the fifth sector with one of the first, second and third rectifiers. The second switch can be operated to isolate the stator windings of the second and fifth sectors. Preferably, the electric circuit has a third switch which is operable to reversibly connect the stator windings of the third and the sixth sector with one of the first, second and third rectifiers. The third switch can be operated to isolate the stator windings of the third and sixth sectors.

In another preferred embodiment, the electric circuit has three inverters and a fourth switch. A first inverter is connectable with the first rectifier, a second inverter is connectable with the second rectifier, and a third inverter is connectable with the third rectifier. The fourth switch is operable to reversibly connect the first rectifier with one of the first, second and third inverters. If the first inverter fails or requires maintenance, energy can be provided from the stator windings of the first and fourth sector through the second or third inverter to the grid, advantageously.

Preferably, the electric circuit has a fifth switch which is operable to reversibly connect the second rectifier with one of the first, second and third inverters. The electric circuit can have a sixth switch which is operable to reversibly connect the third rectifier with one of the first, second and third inverters.

According to a preferred embodiment, the fifth switch is operable to connect the second rectifier with one of the first, second and third inverters. Even when the first rectifier fails, energy can be provided from the stator windings of the first and fourth sector through the second rectifier to one of the inverters and the grid. Further, the first rectifier can be preserved or subjected to maintenance, particularly when the generator operates at partial load.

A preferred embodiment comprises an electronic control unit which is arranged to monitor the stator windings, the rectifiers and/or the inverters. Further, the electronic control unit is arranged to operate or control the first switch, preferably also the fourth switch. The electronic control can be arranged to receive signals from the stator windings, the rectifiers and the inverters. These signals can be periodical. If one of the signals or its absence indicates that the first rectifier is faulty, then the electronic control unit can operate the first switch to direct the energy from the stator windings of the first and fourth sector through the second or third rectifier. If one of the signals or its absence indicates that the first inverter is faulty, then the electronic control unit can operate the fourth switch to direct the energy from the first rectifier through the second or third inverter.

A preferred electronic circuit "A" further comprises the second switch and the third switch. Its first switch is operable to reversibly connect the stator windings of the first and fourth sector with the first rectifier.

According to the second aspect, a wind turbine installation comprises one of the electric circuits explained above and a rotor of the generator can be driven by rotor blades of the wind turbine installation to rotate relative to the stator. Even when the first rectifier fails, energy will be provided from the stator windings of the first and fourth sector through the second or third rectifier to the grid. Further, the first rectifier can be preserved or subjected to maintenance when the generator operates at partial load.

The method according to the third aspect serves to operate one of the electric circuits explained above. The first switch is operated to connect the stator windings of the first and fourth sector with the first rectifier (step S1). Afterwards, the first rectifier can receive energy from the stator windings of the first and fourth sectors and can provide a direct current.

In a preferred embodiment, the first switch is operated to isolate the stator windings of the first and fourth sector (step S2), particularly if one of the stator windings of the first and fourth sector fails or the generator runs at partial load.

According to another preferred embodiment, the first switch is operated to connect the stator windings of the first and fourth sector with the second or third rectifier (step S3), particularly if the first rectifier fails. This may help to improve the energy supply to the grid.

In a further preferred embodiment, the fourth switch is operated to connect the first rectifier with the first inverter (step S4). Afterwards, the first inverter can provide alternating currents to the grid.

According to a preferred embodiment, the fourth switch is operated to connect the first rectifier with the second or third inverter (step S5), particularly if the first inverter fails. This may help to improve the energy supply to the grid.

According to another preferred embodiment, the fifth switch is operated to connect the second rectifier with the first or third inverter (step S6), particularly if the first rectifier fails. This may increase the reliability of a power plant.

In a preferred embodiment, the electronic circuit "A" is operated as follows, preferably periodically:
- At a first point in time, the third switch is operated to isolate the stator windings of the third and sixth sectors from the third rectifier (step S7). Afterwards, the generator runs at partial load while the stator windings of the first and fourth sectors are connected with the first rectifier and the stator windings of the second and fifth sectors are connected with the second rectifier (1^{st} operating state).
- At a second point in time, the third switch is operated to connect the stator windings of the third and sixth sectors with the third rectifier (step S8) and step S2 is also performed.
- At a third point in time, the second switch is operated to isolate the stator windings of the second and fifth sectors from the rectifiers (step S9) and step S1 is executed.
- At a fourth point in time, the second switch is operated to connect the windings of the second and fifth sectors with the second rectifier (step S10) and step S7 is performed. By steps S7 and S10, the 1^{st} operating state is adopted, again.

This may help to preserve the stator windings and the associated rectifiers while the generator runs at partial load.

According to a another preferred embodiment, the electronic circuit "A" is operated as follows, preferably periodically:
- After a first point in time, only the stator windings of the first and fourth sector are connected with the first rectifier while the stator windings of the second, third, fifth and sixth sector are isolated from the rectifiers (2^{nd} operating state). The generator runs at partial load.
- At a second point in time, steps S2 and S10 are executed. Afterwards, only the stator windings of the second and fifth sector are connected with the second rectifier.
- At a third point in time, steps S8 and S9 are performed leading to a state in which only the stator windings of the third and sixth sector are connected with the third rectifier.
- At a fourth point in time, steps S1 and S7 are executed by which the 2^{nd} operating state is achieved once more.
With this preferred method, the stator windings and rectifiers can be preserved even more at a smaller partial load of the generator.

### Exemplary embodiments

Further advantages become apparent to the skilled person from the following exemplary embodiments.

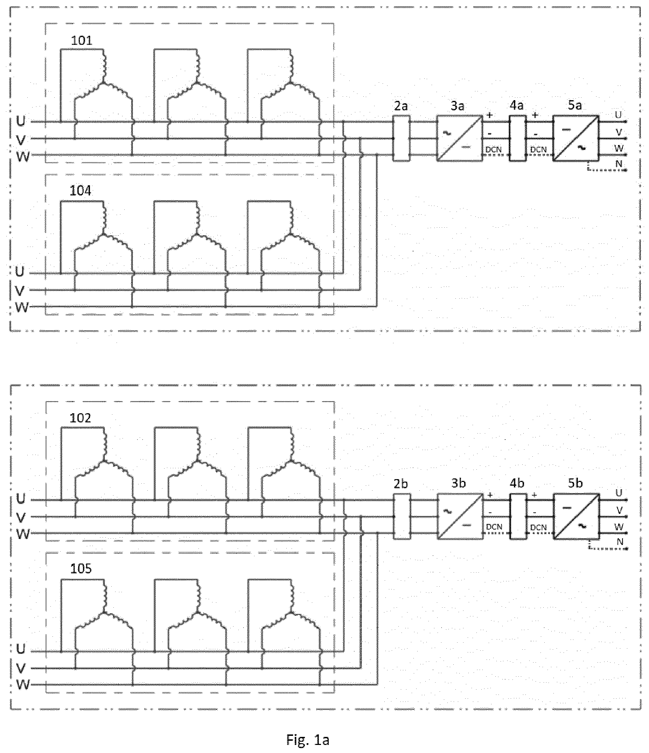

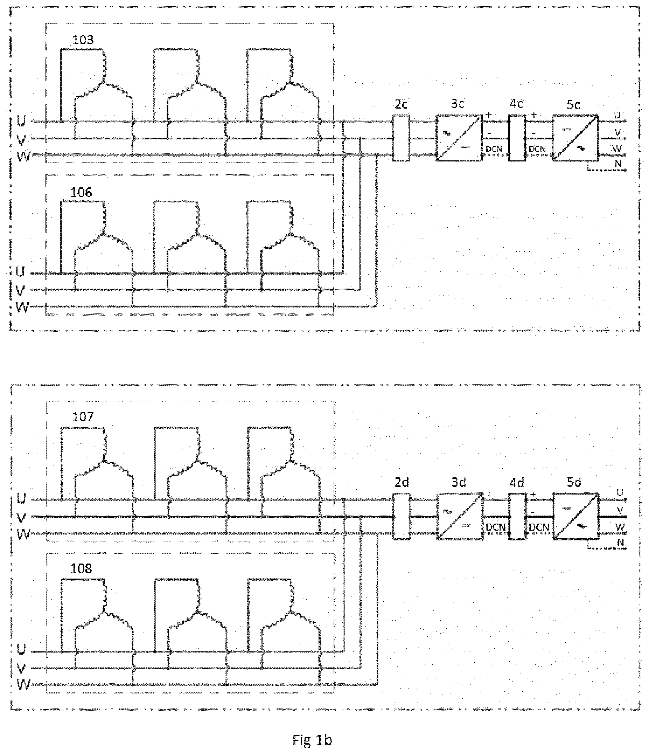

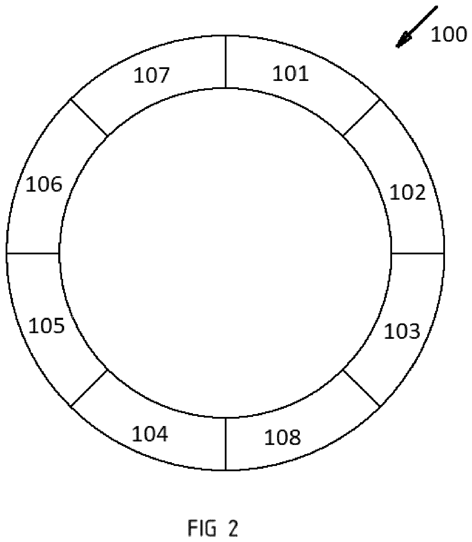

Figures 1a and 1b schematically show an exemplary electric circuit. Its generator has eight sectors 101, 102, 103, 104, 105, 106, 107 and 108, the arrangement of which is shown by Fig. 2. Each of the sectors (indicated by a dashed box) comprises three star circuits of stator windings connected in parallel by conductors U, V, W. The conductors U, V, W of the first 101 and fourth sector 104 are connected with a first switch 2a and lead to a first rectifier 3a. The conductors U, V, W of the second 102 and fifth sector 105 are connected with a second switch 2b and lead to a second rectifier 3b. The conductors U, V, W of the third 103 and sixth sector 106 are connected with a third switch 2c and lead to a third rectifier 3c. The conductors U, V, W of the seventh 107 and eight sector 108 are connected with a switch 2d and lead to a fourth rectifier 3d. Reference sign "N" indicates a neutral conductor and "DCN" a DC neutral conductor (dashed lines).

The first switch is arranged to reversibly connect the stator windings of the first and fourth sector with one of the rectifiers, though not shown. This can be useful if the first rectifier fails or needs maintenance. The second switch is arranged to reversibly connect the stator windings of the second and fifth sector with one of the rectifiers. The third switch is arranged to reversibly connect the stator windings of the third and sixth sector with one of the rectifiers. The switch 2d is arranged to reversibly connect the stator windings of the seventh and eighth sector with one of the rectifiers. This can be useful if any of the rectifiers fails or needs maintenance.

The rectifiers can be connected with four inverters 5a, 5b, 5c, 5d by switches 4a, 4b, 4c, 4d. Switch 4a is operable to reversibly connect the first rectifier with the one of the inverters. Switch 4b is operable to reversibly connect the second rectifier with the one of the inverters. Switch 4c is operable to reversibly connect the third rectifier with the one of the inverters. Switch 4b is operable to reversibly connect the forth rectifier with the one of the inverters. The inverters can provide alternating currents to the grid.

The exemplary electric circuit can be operated according to several methods explained in the following.

Standard operation at nearly full load is achieved after operating switches 2a-2d to connect the windings of the eight sectors with the respective rectifier and operating the switches 4a-4d to connect the rectifiers with the respective inverters.

If the first rectifier fails or requires maintenance, the switch 2a is operated to connect the windings of the first and fourth sectors with one of the rectifiers 3b-3d.

If the first inverter 5a fails or requires maintenance, the switch 4a is operated to connect the first rectifier with one of inverters 5b-5d.

For partial load operation, one of switches 2a-2d can be operated to isolate the respective windings. For an even smaller output, two or three of the switches 2a-2d can be operated to isolate the respective windings. The associated rectifiers and inverters can also rest. To preserve the windings, rectifiers and inverters during partial load operation, windings can be isolated in turns by operating switches 2a-2b suitably:

**Two isolated sectors:**

| A | Sectors (0 indicates isolated sector) | | | | | | | |
|---|---|---|---|---|---|---|---|---|
| Time interval | 101 | 102 | 103 | 108 | 104 | 105 | 106 | 107 |
| 1 | 1 | 1 | 1 | 0 | 1 | 1 | 1 | 0 |
| 2 | 0 | 1 | 1 | 1 | 0 | 1 | 1 | 1 |
| 3 | 1 | 0 | 1 | 1 | 1 | 0 | 1 | 1 |
| 4 | 1 | 1 | 0 | 1 | 1 | 1 | 0 | 1 |

**Four isolated sectors:**

| B | Sectors (0 indicates isolated sector) | | | | | | | |
|---|---|---|---|---|---|---|---|---|
| Time interval | 101 | 102 | 103 | 108 | 104 | 105 | 106 | 107 |
| 1 | 1 | 0 | 1 | 0 | 1 | 0 | 1 | 0 |
| 2 | 0 | 1 | 0 | 1 | 0 | 1 | 0 | 1 |

| C | Sectors (0 indicates isolated sector) | | | | | | | |
|---|---|---|---|---|---|---|---|---|
| Time interval | 101 | 102 | 103 | 108 | 104 | 105 | 106 | 107 |
| 1 | 1 | 1 | 0 | 0 | 1 | 1 | 0 | 0 |
| 2 | 0 | 1 | 1 | 0 | 0 | 1 | 1 | 0 |
| 3 | 0 | 0 | 1 | 1 | 0 | 0 | 1 | 1 |
| 4 | 1 | 0 | 0 | 1 | 1 | 0 | 0 | 1 |

**Six isolated sectors:**

| D | Sectors (0 indicates isolated sector) | | | | | | | |
|---|---|---|---|---|---|---|---|---|
| Time interval | 101 | 102 | 103 | 108 | 104 | 105 | 106 | 107 |
| 1 | 1 | 0 | 0 | 0 | 1 | 0 | 0 | 0 |
| 2 | 0 | 1 | 0 | 0 | 0 | 1 | 0 | 0 |
| 3 | 0 | 0 | 1 | 0 | 0 | 0 | 1 | 0 |
| 4 | 0 | 0 | 0 | 1 | 0 | 0 | 0 | 1 |

### List of reference signs

- 1: electric circuit
- 2, 2a, 2b, 2c, 2d: switches between windings and rectifiers
- 3, 3a, 3b, 3c, 3d: rectifiers
- 4, 4a, 4b, 4c, 4d: switches between rectifiers and inverters
- 5, 5a, 5b, 5c, 4d: inverters
- 6: generator
- 100: stator of generator
- 101, 102, 103, 104, 105, 106, 107, 108: sectors of stator, having stator windings
- U, V, W: three phase conductors
- N: neutral conductor
- DCN: DC neutral conductor

## Claims

1. Electric circuit (1) arranged for a power plant, preferably for a wind turbine installation, the electric circuit comprising a driven generator (6) having a stator (100), the stator comprising
at least six sectors (101, 102, 103, 104, 105, 106) arranged along a circumference of the stator, each sector having three star circuits connected in parallel, each star circuit having three stator windings supported by the stator,
wherein a first sector (101) is arranged opposite of a fourth sector (104), a second sector (102) adjacent to the first sector and opposite of a fifth sector (105), a third sector (103) adjacent to the second sector and opposite of a sixth sector (106),
the electric circuit further comprising
a first rectifier (3a) connectable with the stator windings of the first and fourth sector, a second rectifier (3b) connectable with the stator windings of the second and fifth sector, a third rectifier (3c) connectable with the stator windings of the third and sixth sector,
a first switch (2a) operable to connect the stator windings of the first and fourth sector with one of the first, second and third rectifier.

2. Electric circuit according to claim 1, wherein the first switch is operable to isolate the stator windings of the first and the fourth sector.

3. Electric circuit according to one of the preceding claims, further comprising
a first inverter (5a) connectable with the first rectifier, a second inverter (5b) connectable with the second rectifier, and a third inverter (5c) connectable with the third rectifier,
a fourth switch (4a) operable to connect the first rectifier with one of the first, second and third inverters.

4. Electric circuit according to claim 3, further comprising a fifth switch (4b) operable to connect the second rectifier with one of the first, second and third inverters.

5. Electric circuit according to one of the preceding claims, having an electronic control unit arranged to monitor the stator windings, the rectifiers and the inverters, and arranged to operate the first switch and/or the fourth switch.

6. Wind turbine installation comprising the electric circuit of one of claims 1 to 5, wherein a rotor of the generator can be driven by rotor blades to rotate relative to the stator.

7. Method to operate the electric circuit according to one of claims 1 to 6, wherein the first switch is operated to connect the stator windings of the first and fourth sector with the first rectifier (step S1).

8. Method to operate the electric circuit according to one of claims 1 to 6, wherein the first switch is operated to isolate the stator windings of the first and fourth sector (step S2), particularly if one of the stator windings of the first and fourth sector fails.

9. Method to operate the electric circuit according to one of claims 1 to 6, wherein the first switch is operated to connect the stator windings of the first and fourth sector with the second or third rectifier (step S3), particularly if the first rectifier fails.

10. Method to operate the electric circuit according to one of claims 3 to 6, wherein the fourth switch is operated to connect the first rectifier with the first inverter (step S4).

11. Method to operate the electric circuit according to one of claims 3 to 6, wherein the fourth switch is operated to connect the first rectifier with the second or third inverter (step S5), particularly if the first inverter fails.

12. Method to operate the electric circuit according to one of claims 4 to 6, wherein the fifth switch is operated to connect the second rectifier with the first or third inverter (step S6), particularly if the first rectifier fails.
